# EUROPÄISCHE PATENTSCHRIFT

(11) **EP 0 904 414 B1**
(45) Veröffentlichungstag und Bekanntmachung des Hinweises auf die Patenterteilung: **30.08.2000**
(21) Anmeldenummer: 97919393.5
(22) Anmeldetag: 19.04.1997
(51) Int. Cl.: C21B 7/12, C04B 35/66

(54) **FEUERFESTE MASSE**
REFRACTORY MATERIAL
MATERIAU REFRACTAIRE

(30) Priorität: 19.04.1996 DE 29607867 U
(43) Veröffentlichungstag der Anmeldung: 31.03.1999
(73) Patentinhaber: PERSTORP AB, 284 80 Perstorp (SE); Thyssen Krupp Stahl AG, 47166 Duisburg (DE)
(72) Erfinder: HEINE, Norbert, D-67227 Frankenthal (DE); BALLEWSKI, Thomas, 47441 Moers (DE); GROSSMANN, Manfred, 40591 Düsseldorf (DE)
(74) Vertreter: Leitner, Waldemar, Dr. techn.
(86) Internationale Anmeldenummer: EP9701983
(87) Internationale Veröffentlichungsnummer: WO9740195

(56) Entgegenhaltungen:
- DE-A- 3 637 720
- DE-A- 3 702 935
- INDIAN FOUNDRY JOURNAL, Bd. 21, Nr. 6, - 1975 Seiten 10-10, XP002037375 D.N. BHATIA ET AL.: "Feasibility studies on replacing Linseed Oil by Cashewnut Shell liquid in Core Practice."

## Beschreibung

Die Erfindung betrifft eine feuerfeste Masse, die im wesentlichen aus einem Bindemittel oder einem Bindemittel-Gemisch, einem Füllstoff oder einem Füllstoff-Gemisch sowie einem Härter besteht.

Eine derartige feuerfeste Masse ist bekannt und wird z.B. als Hochofen-Stichloch-Masse eingesetzt. Unter dem Begriff "feuerfeste Masse" sollen hier diejenigen Feuerfestmaterialien verstanden werden, welche der ISO-Norm 1109 oder der ISO-Norm 2246 entsprechen. Nachteilig an den bekannten feuerfesten Massen ist daß als Bindemittel oder Zuschlagsstoff Teer oder teerhaltige Stoffe eingesetzt werden. Ein derartiges Bindemittel für die auf den speziellen Einsatzzweck der feuerfesten Masse abgestimmten Füllstoffe besitzt zwar die vorteilhafte Eigenschaft, daß die damit hergestellte feuerfeste Masse plastisch ist, und daß der hohe Kohlenstoffanteil der teerhaltigen Bindemittel eine gute Bindung der Füllstoffe bewirkt. Der gravierende Nachteil derartiger Bindemittel besteht jedoch darin, daß diese karzinogen sind und daher arbeitshygienische Probleme sowie Probleme bei der Entsorgung mit sich bringen.

In der DE 37 02 935 wird daher zur Reduktion des Teergehalts einer für einen Einsatz als Stichlochmasse gedachten feuerfesten Masse ein Binde- und Plastifizierungsmittel vorgeschlagen, das aus einem oder mehreren grenzflächenaktiven Produkten der Anlagerung von Alkylenoxiden an Substanzen aus der Gruppe der Fettalkohole, der Fettsäuren, der Fettsäurenpolyolester, der Harzsäure, der Harzalkohole und/oder der Naturharze und ihrer Produkte wie Schellack, Balsame, Terpentinöle oder Kolophonium besteht. Hierbei wird bevorzugt, daß die grenzflächenaktive Verbindung aus der Gruppe der Alkylenoxyd-Anlagerungsprodukte an Fettalkohol, Fettsäurenpolyolester im Bereich von 0,1 bis 5 Gewichtsteilen und der Anteile der Alkylenoxid-Anlagerungsprodukte an Naturharz und ihre Produkte ungefähr 0,1 bis 25 Gewichtsanteile liegt.

Durch dieses Bindemittel soll nach Angaben der vorgenannten Druckschrift der Teergehalt in Stichlochmassen, die üblicherweise in einer Größenordnung von 15% und mehr liegt, derart unter 5% abgesenkt werden. Eine kohlenstoffhaltige, keramische, feuerfeste Masse, die das in der oben genannten Druckschrift beschriebene Binde- und Plastifizierungsmittel verwendet, weist daher immer noch einen nicht zu vernachlässigenden Teergehalt auf, so daß auch diese feuerfeste Masse den gravierenden Nachteil besitzt, daß der darin enthaltene Teer zahlreiche aromatische, heterocyclische und kondensierte organische Ringverbindungen enthält, die als toxisch und karcinogen bekannt sind. Diese Verbindungen werden bei der Verarbeitung und Verwendung freigesetzt und führen, wie auch die ensprechenden gesetzlichen Vorschriften ausweisen, zu gesundheitlichen Gefährdungen der Beschäftigten und der Umwelt.

Ein weiterer Nachteil des bekannten Binde- und Plastifizierungsmittels für eine feuerfeste, kohlenstoffhaltige, wasserfreie, keramische Masse besteht darin, daß die bekannte feuerfeste Masse nur eine geringe Kaltdruckfestigkeit besitzen. Niedrige Kaltdruckfestigkeiten sind bei modernen Hochöfen in nachteiliger Art und Weise in der Regel nicht ausreichend.

In der DE 37 21 642 wird ebenfalls ein Binde-und Plastifizierungsmittel für kohlenstoffhaltige, keramische, feuerfeste Massen beschrieben, welches eine Verringerung der gesundheitsschädlichen Inhaltsstoffe und Emmissionen, wie sie von Teer und den gebräuchlichen Teerersatzstoffen herrühren, bewirken soll. Das nur für eine feuerfeste Masse unter Verwendung von Ruß und/oder Graphit in kleinster Verteilungsform mit Partikelgrößen unterhalb von 150 Mikrometer geeignete Binde- und Plastifizierungsmittel enthält zusätzlich zu dem Ruß und/oder Graphit grenzflächenaktive Produkte der Anlagerung von Alkylenoxiden an Substanzen aus der Gruppe der Fettalkohole, der Fettsäuren, der Fettsäurepolyolester und/oder alizyklischen Kohlenwasserstoffprodukte vom Terpentin - und Naturharztyp. Nachteilig an dem bekannten Bindemittel ist wiederum, daß es nur über eine geringe Kaltdruckfestigkeit verfügt und außerdem nicht vollständig teerfrei ist.

Aus der DE 44 37 584 ist eine Füllmasse für Abstichöffnungen eines Hochofens bekannt, die 5-15 Gewichtsteile Anthracen-Öl und 1-7 Gewichtsteile Borsäure enthält, die als Bindemittel zugegeben und mit 100 Gewichtsteilen einer Zusammensetzung eines Feuerfestmaterials verknetet ist, wobei die Zusammensetzung des Feuerfestmaterials aus einer Verbindung oder einer Kombination von zwei oder mehreren Verbindungen besteht, die aus der Gruppe, die Aluminiumoxid, Bauxit, Spinell, Pagodenstein, Schamotte, Siliziumkarbit, Graphit, Ton oder ähnlichem besteht, ausgewählt ist. Die aus der oben genannten Druckschrift bekannte Füllmasse soll nach den in der Druckschrift enthaltenen Angaben die Unterdrükkung von Umweltverschmutzungsfaktoren in dem Füllmassenmaterial und insbesondere die Menge des als karzinogen angesehenen Benzpyren verringern. Eine derartige Füllmasse ist in arbeitshygienischer Sicht jedoch kritisch, da auch im Anthracen-Öl Benzpyren in einer Menge von 80 ppm enthalten ist, so daß eine derartige Füllmasse nur in Ausnahmefällen den Vorschriften der maximalen Arbeitsplatzkonzentration genügt.

Aus der DE-OS 36 37 720 ist eine feuerfeste Masse bekannt, die mineralische Füllstoffe, Kohle und Koks, organische Lösungsmittel, Reaktionsharz und Plastifizierungsmittel enthalten kann, wobei als Bindemittel ein Gemisch aus einem Novolak oder einer Novolak-Lösung und einem oder mehreren hitzereaktiven natürlichen Ölen, zum Beispiel Cashewnut-Schalenölen, alleine oder im Gemisch mit anderen hitzereaktiven Ölen enthalten ist. Nachteilig an dieser bekannten feuerfesten Masse ist, daß sie weiterhin Teer, Teerprodukte oder organische Lösungsmittel enthält.

Aus der Druckschrift Indian Foundry Journal, Bd. 21, Juni 1975, S. 10-15 ist es bekannt, Cashew-Nut-Shell-Liquid, gemischt mit Sand oder Katalysator, zur Herstellung von Kernsand zu verwenden.

Es ist daher Aufgabe der Erfindung, eine feuerfeste Masse der eingangs genannten Art derart weiterzubilden, daß sie in ökologischer Hinsicht unproblematisch und insbesondere frei von Teer oder Teerprodukten ist.

Diese Aufgabe wird erfindungsgemäß dadurch gelöst, daß als Bindemittel entweder Cashew-Nut-Shell-Liquid, ein Cashew-Nut-Shell-Liquid-haltiger Stoff oder ein Cashew-Nut-Shell-Liquid-haltiges Stoffgemisch alleine oder in Verbindung mit einem flüssigen Phenolharz des Resol-Typs oder einem Harz des Resol-Typs auf der Basis von Phenolhomologen oder Formaldehydhomologen verwendet ist.

Erfindungsgemäß ist also vorgesehen, daß als Bindemittel Cashew-Nut-Sheil-Liquid (CNSL) oder ein Cashew-Nut-Shell-Liquid-haltiger Stoff oder ein derartiges Stoffgemisch entweder alleine oder in Verbindung mit flüssigen Phenolharzen des Typs Resol oder Harzen auf der Basis von Phenolhomologen verwendet wird. Diese erfindungemäße Maßnahme besitzt den Vorteil, daß es hierdurch besonders einfach möglich ist, die in der Praxis geforderten Festigkeiten zu erreichen beziehungsweise durch Variationen der Bindemittelzusammensetzung auf anlagenspezifische Anforderungen einzustellen.

Die erfindungsgemäße feuerfeste Masse zeichnet sich desweiteren bei einer einfachen Herstellbarkeit nicht nur dadurch aus, daß aufgrund der erfindungsgemäßen Substitution der teerhaltigen Bindemittel durch CNSL oder CNSL-haltige Bindemittel die erfindungsgemäße feuerfeste Masse in ökologischer Hinsicht unproblematisch ist. Ein weiterer Vorteil der erfindungsgemäßen feuerfesten Masse besteht darin, daß als Bindemittel oder Bindemittelkomponente ein nachwachsender Rohstoff verwendet wird.

Eine vorteilhafte Weiterbildung der Erfindung sieht vor, daß als Bindemittel für die Füllstoffe der erfindungemäßen feuerfesten Masse vorpolymerisiertes CNSL oder ein vorpolymerisiertes CNSL enthaltendes Stoffgemisch in Verbindung mit einem Formaldehyd spendenden Härter verwendet wird. Diese erfindungemäße Maßnahme besitzt den Vorteil, daß die hierdurch hergestellte feuerfeste Masse schneller härtet. Bei der Verwendung dieser feuerfesten Masse als Hochofen-Stichloch-Masse oder als Stampfmasse ermöglicht die besonders kurze Härtzeit z.B. eine bessere Verfügbarkeit der Abstichsysteme eines Hochofens. Bei der Verwendung dieser feuerfesten Masse zur Herstellung vorgeformter Teile, bei denen durch Hitzebehandlung das Bindemittel carbonisiert, können höhere Produktionsgeschwindigkeiten erzielt werden.

Eine weitere vorteilhafte Weiterbildung der Erfindung sieht vor, daß als Bindemittel ein Copolymerisat aus CNSL oder einem CNSL-haltigen Stoff und Phenol und/oder Phenolhomologen verwendet wird. Eine derartige Maßnahme besitzt den Vorteil, daß das erfindungemäße Bindemittel für die erfindungsgemäße feuerfeste Masse nicht mehr mechanisch vermischt werden muß.

Eine weitere vorteilhafte Weiterbildung der Erfindung sieht vor, daß dem erfindungsgemäßen Bindemittel ein chemisch und/oder physikalisch inerter und/oder kondensationsfähiger Zuschlagsstoff zugesetzt wird.

Weitere vorteilhafte Weiterbildungen der Erfindung sind Gegenstand der Unteransprüche.

Weitere Einzelheiten und Vorteile der Erfindung sind den nachfolgend beschriebenen Ausführungsbeispielen zu entnehmen.

Die feuerfeste Masse besteht in an sich bekannter Art und Weise im wesentlichen aus einem oder mehreren Füllstoffen inklusive Kohlenstoffträger oder einem Gemisch derartiger Füllstoffe und einem diese Füllstoffe zu einer plastischen Masse bindenden Bindemittel oder Bindemittel-Gemisch. Als Füllstoffe können z.B. mineralische Füllstoffe wie Kaolin, Dolomit oder Korund verwendet werden. Dem Fachmann ist bekannt, wie er die Füllstoffe hinsichtlich ihrer für den geplanten Einsatzzweck der feuerfesten Masse relevanten Eigenschaften auszuwählen hat, so daß weitere Ausführungen zu den physikalischen und/oder chemischen Eigenschaften dieser an und für sich bekannten Füllstoffe an dieser Stelle nicht erforderlich sind.

Wichtig ist, daß bei der beschriebenen feuerfesten Masse nun nicht mehr - wie bei den bekannten feuerfesten Massen - als Bindemittel für die Füllstoffe karzinogene und daher in arbeitshygienischer Hinsicht und bei der Entsorgung problematische Teerstoffe oder Teerderivate eingesetzt werden, sondern daß als Bindemittel CNSL oder ein CNSL-haltiger Stoff eingesetzt wird, wobei mit der Bezeichnung CNSL "Cashew-Nut-Shell-Liquid" gemeint ist, also ein ökologisch unbedenklicher und nachwachsender Rohstoff.

Die feuerfeste Masse wird aus den o.g. Füllstoffen, dem Bindemittel und dem Härter hergestellt, indem diese Komponenten mechanisch vermischt werden, bis eine hinreichend hohe homogene Verteilung der Füllstoffe im Bindemittel erreicht wird. Diese elastische Masse wird dann in entsprechende Form, z.B. in Ziegelform gebracht, und gelangt derart in die Anwendung bzw. in den Handelsverkehr. Sie wird z.B. als Hochofen-Stichloch-Masse zum (Wieder)Verschließen eines Hochofens nach dem Abstich des im Hochofen geschmolzenen Stahls oder als Rinnenmasse zur Ausbildung von den flüssigen Stahl transportierenden Rinnen oder als Stampfmasse zum Ausbessern von Schadstellen sowie zur Fertigung vorgeformter Teile, bei denen das Bindemittel durch Hitzebehandlung carbonisiert, verwendet.

Als CNSL-haltiges Bindemittel für die Füllstoffe der feuerfesten Masse kommen nun insbesondere folgende nachstehend beschriebenen Varianten in Frage:

Zuerst ist es möglich, als Ausgangsbasis für das Bindemittel-Harz CNSL, welches ggfs. mit chemisch und/oder physikalisch inerten und/oder kondensationsfähigen Zuschlagsstoffen versetzt wurde, zu verwenden. Diese derart präparierte Komponente des Bindemittel-Harzes wird dann mit einem unter Wärmeeinwirkung Formaldehyd spendenden Härter vermischt, um die Polymerkörper des CNSL zu vernetzen. Dieses derart hergestellte Bindemittel-Harz wird dann - wie bereits vorstehend beschrieben - mit den Füllstoffen zur plastischen feuerfesten Masse mechanisch vermischt.

Eine weitere Möglichkeit besteht darin, daß als Bindemittel für die Füllstoffe ein vorpolymerisiertes CNSL oder ein vorpolymerisierendes CNSL-Gemisch verwendet wird. Eine derartige Ausbildung besitzt den Vorteil, daß dadurch besonders rasche Härtezeiten erreicht werden.

Eine weitere Möglichkeit besteht darin, daß als Bindemittel für die Füllstoffe der beschriebenen feuerfesten Masse ein CNSL-haltiger Stoff oder ein derartiges Stoffgemisch in Verbindung mit flüssigen Phenolharzen des Typs Resol, die bekanntermaßen ein Molverhältnis von Pheno I zu Formaldehyd von 1: größer 1 besitzen oder analogen Harzen auf der Basis von Phenol- oder Formaldehydhomologen verwendet wird, wobei bevorzugt wird, daß hierbei der Anteil des freien (d.h. monomeren), nach der Kondensation oder mechanischer Aufbereitung vorliegenden Phenols unter 5 % liegt.

Als weitere Variante ist es möglich, als Bindemittel für die Füllstoffe der beschriebenen feuerfesten Masse ein Copolymerisat aus einem CNSL-haltigen Stoff oder aus CNSL und Phenol und/oder Phenolhomologen zu verwenden.

## Patentansprüche

1. Feuerfeste Masse, die im wesentlichen aus einem Bindemittel oder einem Bindemittel-Gemisch, einem Füllstoff oder einem Füllstoff-Gemisch sowie einem Härter besteht, dadurch gekennzeichnet, daß als Bindemittel entweder Cashew-Nut-Shell-Liquid, ein Cashew-Nut-Shell-Liquid-haltiger Stoff oder ein Cashew-Nut-Shell-Liquid-haltiges Stoffgemisch alleine oder in Verbindung mit einem flüssigen Phenolhartz des Resol-Typs oder einem Harz des Resol-Typs auf der Basis von Phenolhomologen oder Formaldehydhomologen verwendet ist.

2. Feuerfeste Masse nach Anspruch 1, dadurch gekennzeichnet, daß das die Füllstoffe oder das Füllstoff-Gemisch der feuerfesten Masse bindende Cashew-Nut-Shell-Liquid, der Cashew-Nut-Shell-Liquid-haltige Stoff oder das Cashew-Nut-Shell-Liquid-Stoffgemisch vorpolymerisiertes Cashew-Nut-Shell-Liquid enthält.

3. Feuerfeste Masse nach Anspruch 1, dadurch gekennzeichnet, daß als Bindemittel für die Füllstoffe oder das Füllstoff-Gemisch der feuerfesten Masse ein Copolymerisat aus Cashew-Nut-Shell-Liquid oder einem Cashew-Nut-Shell-Liquid-haltigen Stoff und Phenol und/oder Phenolhomologen oder Formaldehydhomologen verwendet ist.

4. Feuerfeste Masse nach einem der Ansprüche 1 bis 3, dadurch gekennzeichnet, daß das flüssige Phenolharz des Typs Resol ein Molverhältnis von Phenol zu Formaldehyd von 1: größer 1 aufweist, oder daß das Harz auf der Basis von Phenol- oder Formaldehydhomologen ein zum vorgenannten Phenolharz analoges Harz ist.

5. Feuerfeste Masse nach einem der Ansprüche 1 bis 4, dadurch gekennzeichnet, daß der im Bindemittel vorhandene Anteil an freiem Phenol unter 5 % liegt.

6. Feuerfeste Masse nach einem der vorangehenden Ansprüche, dadurch gekennzeichnet, daß der dem Bindemittel zugefügte Härter ein Formaldehyd spendender Härter ist.

7. Feuerfeste Masse nach einem der vorangehenden Ansprüche, dadurch gekennzeichnet, daß im Bindemittel ein chemisch undloder physikalisch inerter und/oder kondensationsfähiger Zuschlagsstoff zugesetzt ist.

8. Hochofen-Stichloch-Masse, dadurch gekennzeichnet, daß sie eine feuerfeste Masse nach einem der Ansprüche 1 bis 7 aufweist.

9. Rinnenmasse, dadurch gekennzeichnet, daß sie eine feuerfeste Masse nach einem der Ansprüche 1 bis 7 aufweist.

10. Stampfmasse, dadurch gekennzeichnet, daß sie eine feuerfeste Masse nach einem der Ansprüche 1 bis 7 aufweist.

11. Formteil, insbesondere Block oder Stange, dadurch gekennzeichnet, daß es eine feuerfeste Masse nach einem der Ansprüche 1 bis 7 aufweist.

## Claims

1. A refractory material which generally comprises of a binder or a binder mixture, a filler or a filler mixture and a hardener, characterized in that either cashew nutshell liquid, a cashew nutshell liquid - comprising substance or a cashew nutshell liquid - comprising substance mixture alone or in combination with a liquid phenol resin of the resol-type or a resin of the resol-type based on phenol homologues or formaldehyde homologues is used as binder.

2. The refractory material according to claim 1, characterized in that the cashew nutshell liquid, the cashew nutshell liquid - comprising substance or the cashew nutshell liquid substance mixture, which binds the fillers or the filler mixture of the refractory material, comprises prepolymerized cashew nutshell liquid.

3. The refractory material according to claim 1, characterized in that a copolymerizate of cashew nutshell liquid or of a cashew nutshell liquid - comprising substance and phenol and/or phenol homologues or formaldehyde homologues is used as binder for the fillers or the filler mixture of the refractory material.

4. The refractory material according to one of the claims 1 to 3, characterized in that the liquid phenol resin of the resol-type has a phenol to formaldehyde molar ratio of 1 : greater than 1, or that the resin based on phenol homologues or formaldehyde homologues is a resin analogous to said phenol resin.

5. The refractory material according to one of the claims 1 to 4, characterized in that the amount of free phenol present in the binder is less than 5%.

6. The refractory material according to one of the afore-mentioned claims, characterized in that the hardener added to the binder is a hardener providing formaldehyde.

7. The refractory material according to one of the afore-mentioned claims, characterized in that a chemically and/or physically inert and/or condensable additive is added to the binder.

8. A blast furnace taphole material, characterized in that it comprises a refractory material according to one of the claims 1 to 7.

9. A trough material, characterized in that it comprises a refractory material according to one of the claims 1 to 7.

10. A ramming material, characterized in that it comprises a refractory material according to one of the claims 1 to 7.

11. A formed part, in particular a block or a rod, characterized in that it comprises a refractory material according to one of the claims 1 to 7.

## Revendications

1. Masse réfractaire composée essentiellement d'un liant ou d'un mélange de liants, d'une matière de charge ou d'un mélange de matières de charge ainsi que d'un durcisseur, caractérisée en ce que l'on utilise comme liant soit du Cashew Nut Shell Liquid, soit une substance contenant du Cashew Nut Shell Liquid, soit un mélange de substances contenant du Cashew Nut Shell Liquid, seul ou en combinaison avec une résine phénolique liquide du type résol ou une résine de type résol à base d'homologues du phénol ou d'homologues du formaldéhyde.

2. Masse réfractaire selon la revendication 1, caractérisée en ce que le Cashew Nut Shell Liquid, la substance contenant du Cashew Nut Shell Liquid ou le mélange de substances contenant du Cashew Nut Shell Liquid qui lie les matières de charge ou les mélange de matières de charge contient du Cashew Nut Shell Liquid prépolymérisé.

3. Masse réfractaire selon la revendication 1, caractérisée en ce que l'on utilise comme liant pour les matières de charge ou le mélange de matières de charge de la masse réfractaire un copolymère de Cashew Nut Shell Liquid ou d'une substance contenant du Cashew Nut Shell Liquid et de phénol et/ou homologues du phénol et/ou homologues du formaldéhyde.

4. Masse réfractaire selon l'une des revendications 1 à 3, caractérisée en ce que la résine phénolique de type résol présente un rapport molaire du phénol sur le formaldéhyde de 1 plus grand que 1 ou en ce que la résine à base d'homologues du phénol ou du formaldéhyde est une résine analogue à la résine phénolique précitée.

5. Masse réfractaire selon l'une des revendications 1 à 4, caractérisée en ce que la teneur en phénol libre dans le liant est inférieure à 5%.

6. Masse réfractaire selon l'une des revendications précédentes, caractérisée en ce que le durcisseur ajouté au liant est un durcisseur libérant du formaldéhyde.

7. Masse réfractaire selon l'une des revendications précédentes, caractérisée en ce qu'un additif chimiquement et/ou physiquement inerte et/ou apte à la condensation est ajouté dans le liant.

8. Masse de bouchage pour hauts fourneaux, caractérisée en ce qu'elle contient une masse réfractaire selon l'une des revendications 1 à 7.

9. Masse pour canal de coulée, caractérisée en ce qu'elle contient une masse réfractaire selon l'une des revendications 1 à 7.

10. Pisé réfractaire foulé, caractérisé en ce qu'il contient une masse réfractaire selon l'une des revendications 1 à 7.

11. Pièce de forme, notamment bloc ou barre, caractérisée en ce qu'elle contient une masse réfractaire selon l'une des revendications 1 à 7.
